**Europäisches Patentamt**

**European Patent Office**

**Office européen des brevets**

(11) Numéro de publication : **0 038 594
B1**

(12) **FASCICULE DE BREVET EUROPÉEN**

(45) Date de publication du fascicule du brevet :
**13.06.84**

(21) Numéro de dépôt : **81200398.6**

(22) Date de dépôt : **07.04.81**

(51) Int. Cl.³ : **H 04 M 19/08**, H 04 Q 3/00

(54) **Perfectionnements aux joncteurs d'abonné électroniques.**

(30) Priorité : **18.04.80 FR 8008770**

(43) Date de publication de la demande :
**28.10.81 Bulletin 81/43**

(45) Mention de la délivrance du brevet :
**13.06.84 Bulletin 84/24**

(84) Etats contractants désignés :
**BE CH DE FR GB LI SE**

(56) Documents cités :
**BE-A- 653 358
FR-A- 2 404 976
GB-A- 2 001 508
GB-A- 2 018 093
US-A- 3 522 384
US-A- 4 064 377**

(73) Titulaire : **TELECOMMUNICATIONS RADIOELECTRI-
QUES ET TELEPHONIQUES T.R.T.
88, rue Brillat Savarin
F-75013 Paris (FR)**

(72) Inventeur : **Ferrieu, Gilbert Marie Marcel
SOCIETE CIVILE S.P.I.D. 209 rue de l'Université
F-75007 Paris (FR)**
Inventeur : **Osmond, Etienne Jules Raymond
SOCIETE CIVILE S.P.I.D. 209, rue de l'Université
F-75007 Paris (FR)**
Inventeur : **Hetet, Yves Jean François
SOCIETE CIVILE S.P.I.D. 209, rue de l'Université
F-75007 Paris (FR)**

(74) Mandataire : **Charpail, François et al
Société Civile S.P.I.D. 209, rue de l'Université
F-75007 Paris (FR)**

Jouve, 18, rue St-Denis, 75001 Paris, France

## Description

L'invention concerne un joncteur d'abonné alimenté par une source d'alimentation continue dont les deux bornes sont connectées à deux bornes d'alimentation de deux amplificateurs à travers deux impédances de charge, les deux autres bornes d'alimentation desdits amplificateurs étant connectées aux deux extrémités de la ligne d'abonné et constituant leurs bornes de sortie à travers lesquelles circule le courant dans la ligne d'abonné, les bornes d'entrée de ces amplificateurs recevant, de façon contreréactive, deux tensions en phase et en opposition de phase avec la tension aux bornes d'une impédance parcourue par un courant de somme égal à la somme pondérée des courants entrant et sortant de la ligne d'abonné avec des coefficients de pondération substantiellement égaux.

On sait qu'un joncteur d'abonné est un dispositif destiné à connecter une ligne d'abonné à un central téléphonique. L'une des fonctions assurée par un joncteur est l'alimentation de la ligne d'abonné en courant continu. Un joncteur d'abonné électronique du genre spécifié ci-dessus a été décrit dans la demande de brevet français n° 78 18 960 déposée au nom de la demanderesse le 26 juin 1978. Du fait de la structure de ce joncteur, il se comporte pratiquement comme un pont d'alimentation connecté à la source continue d'alimentation et ayant une résistance parfaitement équilibrée par rapport aux deux fils de la ligne d'abonné, cet équilibrage étant indépendant des courants longitudinaux qui peuvent naître accidentellement sur la ligne d'abonné. Par un réglage du courant de somme et/ou de l'impédance traversée par ce courant de somme, on peut amener la résistance de pont d'alimentation du joncteur à une valeur spécifiée sans modifier son équilibrage.

Pour éviter qu'une puissance trop importante soit dissipée dans les amplificateurs fournissant le courant continu à la ligne d'abonné et pour faciliter ainsi l'intégration du joncteur, on a préconisé dans la demande de brevet français non publiée, déposée au nom de la demanderesse le 25 juin 1979 sous le n° 79 16 261, d'insérer deux impédances de charge entre les deux bornes d'alimentation des amplificateurs et les deux bornes de la source d'alimentation. Ces deux impédances ont pour but de procurer une partie de la chute de tension continue que doit assurer le joncteur. Dans cette demande de brevet, ces impédances de charge sont des dipôles dont l'impédance est fonction du courant qui les traverse. Or, si un courant longitudinal prend naissance accidentellement dans la ligne d'abonné, l'un de ces dipôles est parcouru par le courant transversal fourni par le joncteur, augmenté du courant longitudinal tandis que l'autre dipôle est parcouru par le courant transversal diminué du courant longitudinal. Il en résulte que les deux dipôles ne procurent pas la même chute de tension et que pour une certaine intensité du courant longitudinal l'un des dipôles procure une chute de tension assez élevée pour empêcher le fonctionnement correct de l'amplificateur auquel il est connecté. Ainsi, avec des impédances de charge conçues de cette manière sous forme de dipôles, le fonctionnement de joncteur est perturbé, en présence d'un courant longitudinal plus élevé que 20 à 30 % du courant transversal fourni par le joncteur.

La présente invention a pour but d'éviter cette limitation des performances du joncteur, en fournissant des impédances de charge dont la valeur soit pratiquement indépendante du courant longitudinal.

Conformément à l'invention, un joncteur d'abonné du genre spécifié ci-dessus comporte des moyens pour former deux tensions de commande desdites impédances de charge, dont l'une est formée en décalant avec une certaine tension de décalage la tension aux bornes de ladite impédance parcourue par le courant de somme et dont l'autre est en opposition de phase avec la première tension de commande, ces tensions de commande étant appliquées aux deux impédances de charge avec la même phase que les tensions appliquées aux bornes d'entrée des deux amplificateurs correspondants, ces impédances de charge comportant un circuit suiveur de tension pour former sur les deux bornes d'alimentation des amplificateurs auxquelles elles sont connectées des tensions substantiellement égales auxdites tensions de commande.

La description suivante en regard des dessins annexés, le tout donné à titre d'exemple fera bien comprendre comment l'invention peut être réalisée.

La figure 1 est un schéma du joncteur connu.

La figure 2 est un schéma du joncteur de l'invention.

La figure 3 est un diagramme montrant la chute de tension dans les impédances de charge.

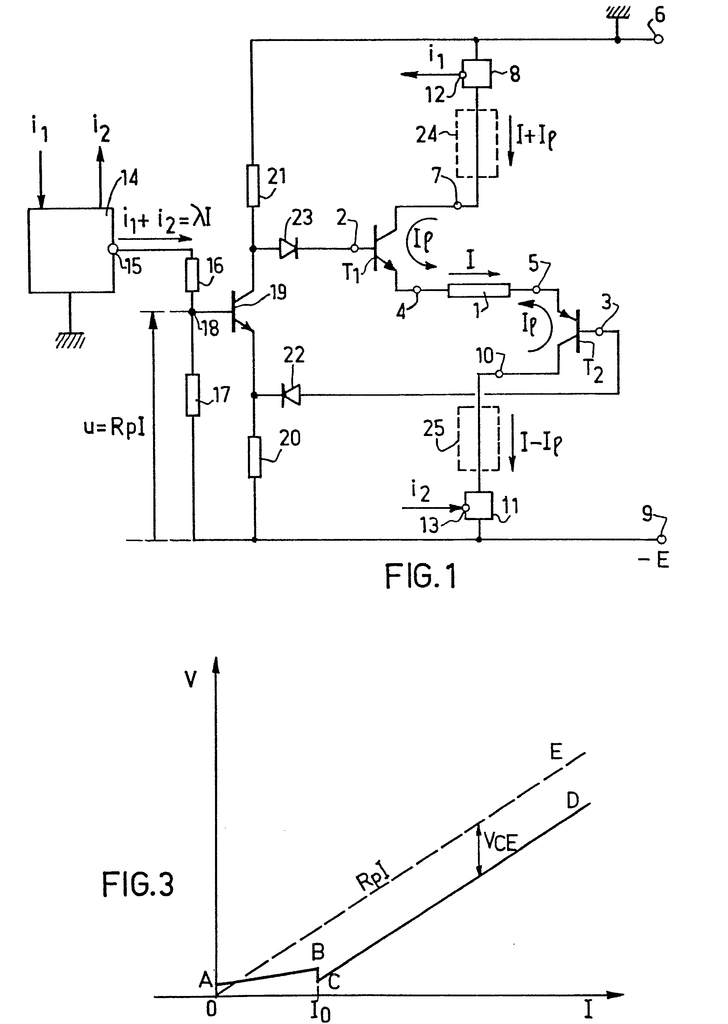

Un joncteur d'abonné électronique du genre décrit dans la demande de brevet français précitée n° 78 18 960 pose un problème que l'on va exposer à l'aide du schéma de la figure 1. Ce schéma représente l'agencement des éléments de ce joncteur, qui servent à faire circuler dans la ligne d'abonné 1 le courant continu de boucle I, dans le sens indiqué par la flèche. Il n'est pas utile pour la compréhension du problème et de la solution de l'invention, d'incorporer à ce schéma les éléments qui permettent de faire circuler le courant de boucle dans l'autre sens et qui ont été décrits dans les demandes de brevet précitées.

Pour fournir à la ligne d'abonné le courant de boucle, le joncteur comporte deux amplificateurs constitués, dans l'exemple représenté, par un transistor npn $T_1$ et par un transistor pnp $T_2$, ces deux transistors pouvant être des transistors composites. Les bases des transistors $T_1$ et $T_2$ constituent les entrées 2 et 3 des deux amplificateurs. Les émetteurs des transistors $T_1$ et $T_2$ constituent les sorties 4 et 5 des deux amplificateurs et ces sorties sont reliées aux deux fils de la ligne d'abonné 1. Les collecteurs des transistors $T_1$ et $T_2$ constituent les bornes 7 et 10 par lesquelles sont alimentés les deux amplificateurs. La borne 7 est reliée à la borne positive 6 d'une source d'alimentation par l'intermédiaire d'un circuit 8 ayant la fonction de miroir de courant. Cette borne positive 6 est au potentiel 0 de la masse. La borne 10 est reliée à la borne négative 9 de la source d'alimentation par l'intermédiaire du circuit 11 ayant la fonction de miroir de courant. La borne négative 9 est au potentiel − E (par exemple − 48 V).

Les miroirs de courant 8 et 11 sont traversés respectivement par les courants de collecteur des transistors $T_1$ et $T_2$. Ils sont construits de façon semblable avec des transistors complémentaires, de façon à engendrer sur leurs bornes de sortie 12 et 13 des courants $i_1$ et $i_2$ proportionnels aux courants les traversant, avec le même coefficient de proportionnalité $\lambda/2$ inférieur à 1, appelé aussi coefficient de pondération.

Les deux courants $i_1$ et $i_2$ sont appliqués au circuit 14 qui forme le courant de somme $i_1 + i_2$ et qui peut comporter éventuellement, avant la formation de ce courant de somme, des moyens pour compenser des différences entre les coefficients de pondération des miroirs de courant 8 et 11. Une borne du circuit 14 est reliée à la masse et sur sa borne de sortie 15 apparaît le courant de somme $i_1 + i_2$ qui s'écoule vers la borne négative 9 à travers les résistances 16 et 17 en série. Le courant de somme produit une chute de tension u aux bornes de la résistance de charge 17 reliée d'un côté à la borne négative 9. L'autre borne 18 de cette résistance 17 est connectée à la base du transistor npn 19 dont l'émetteur est relié à la borne négative 9 à travers la résistance 20 et dont le collecteur est relié à la borne positive 6 à travers la résistance 21 ayant la même valeur que la résistance 20. D'autre part, l'émetteur du transistor 19 est relié, par l'intermédiaire de la diode 22, à la borne d'entrée 3 de l'amplificateur constitué par le transistor $T_2$ et le collecteur du transistor 19 est relié par l'intermédiaire de la diode 23 à la borne d'entrée 2 de l'amplificateur constitué par le transistor $T_1$.

On rappelle maintenant les propriétés principales du joncteur que l'on vient de décrire et qui sont utiles pour comprendre la présente invention. Le courant de somme $i_1 + i_2$ ne dépend que du courant transversal I et ne dépend pas des courants longitudinaux dans la ligne d'abonné ; ce courant de somme peut s'écrire $i_1 + i_2 = \lambda I$. La tension u aux bornes de la résistance 17 de valeur R vaut $u = \lambda RI$. Les tensions sur les bornes d'entrée 2 et 3 qui sont 0 et − E en l'absence de courant transversal I dans la ligne d'abonné, deviennent respectivement − u et − E + u, grâce au chemin de contreréaction créé par le transistor 19 et les diodes 22 et 23. En négligeant la chute de tension dans les diodes base-émetteur des transistors $T_1$ et $T_2$, on retrouve ces tensions

− u et − E + u sur les bornes 4 et 5 reliées à la ligne d'abonné. Ainsi, le joncteur se comporte comme un pont d'alimentation qui, pour faire circuler le courant I dans la ligne d'abonné, procure des chutes de tension de valeur absolue u entre la borne 4 et la borne positive 6 de la source d'alimentation et entre la borne 5 et la borne négative 9 de la source d'alimentation. Ces deux chutes de tension créées par le joncteur sont égales à la chute de tension u aux bornes de la résistance 17. On appelle par la suite $R_p$ la résistance équivalente de pont d'alimentation du joncteur, relative à chaque borne 6 et 9 de la source d'alimentation. On a évidemment d'après ce qui précède :

$$u = R_p I \qquad R_p = \lambda R \qquad (1)$$

Avec le joncteur tel qu'on l'a décrit jusqu'à présent, une puissance relativement importante peut être dissipée dans les amplificateurs constitués par les transistors $T_1$ et $T_2$. En effet, en appelant W la résistance de la ligne d'abonné, la chute de tension que doit procurer le joncteur est $2 u = E − WI$. Si l'on néglige la chute de tension dans les miroirs de courant 8 et 11, cette chute de tension est réalisée entièrement dans l'espace émetteur-collecteur des transistors $T_1$ et $T_2$. Elle est élevée dans le cas de lignes courtes (W faible) et entraîne alors une dissipation de puissance importante dans les transistors $T_1$ et $T_2$, ce qui est un inconvénient si l'on veut réaliser un joncteur entièrement intégré sur un corps semiconducteur.

Pour pallier cet inconvénient, on a proposé dans la demande de brevet français non publiée, déposée au nom de la demanderesse le 25 juin 1979 sous le n° 79 16 261, de disposer sur les trajets des courants de collecteur des transistors $T_1$ et $T_2$ deux dipôles 24 et 25 représentés en pointillé sur la figure 1. Ces deux dipôles ont pour fonction de produire une partie de la chute de tension $E − WI$, la dissipation de puissance s'y produisant partiellement dans une résistance, de façon que la chute de tension dans l'espace émetteur-collecteur des transistors $T_1$ et $T_2$ soit réduite et juste suffisante pour que les courants de conversation modulant le courant I soient transmis. Chaque dipôle est construit au moyen d'un circuit actif qui est commandé par le courant traversant le dipôle pour présenter des valeurs d'impédance convenables. Cette solution est satisfaisante tant qu'au courant de boucle I engendré par le joncteur ne se superposent pas des courants longitudinaux engendrés intempestivement dans la ligne d'abonné. En présence d'un courant longitudinal $I_l$, le dipôle 24 par exemple est traversé par le courant $I + I_l$ et le dipôle 25 est traversé par le courant $I − I_l$. Comme on l'a vu précédemment les tensions sur les bases des transistors $T_1$, $T_2$ restent fixées respectivement à − u et − E + u de façon indépendante du courant longitudinal $I_l$ ; par contre comme les dipôles 24 et 25 ont une impédance qui est fonction de l'intensité du courant qui les traverse, il se produit une augmentation de la tension sur le collecteur du transistor $T_2$ et une diminution de la tension sur le collecteur du transistor $T_1$. Lorsque le courant longitudinal $I_l$ atteint une certaine intensité de l'ordre de 20 à 30 % de celle du courant de boucle $I$ normal, la tension sur le collecteur du transistor $T_1$ atteint la tension $-$ u sur sa base et ce transistor $T_1$ est saturé, ce qui entraîne notamment que les courants de conversation ne sont plus transmis par le joncteur.

La présente invention a pour but d'éviter cette limitation des performances du joncteur en disposant sur le trajet du courant de collecteur des transistors $T_1$ et $T_2$, non pas des dipôles dont la valeur d'impédance est commandée uniquement par le courant qui les traverse, mais des impédances de charge comportant une borne de commande pour commander leur valeur d'impédance par une tension judicieusement choisie.

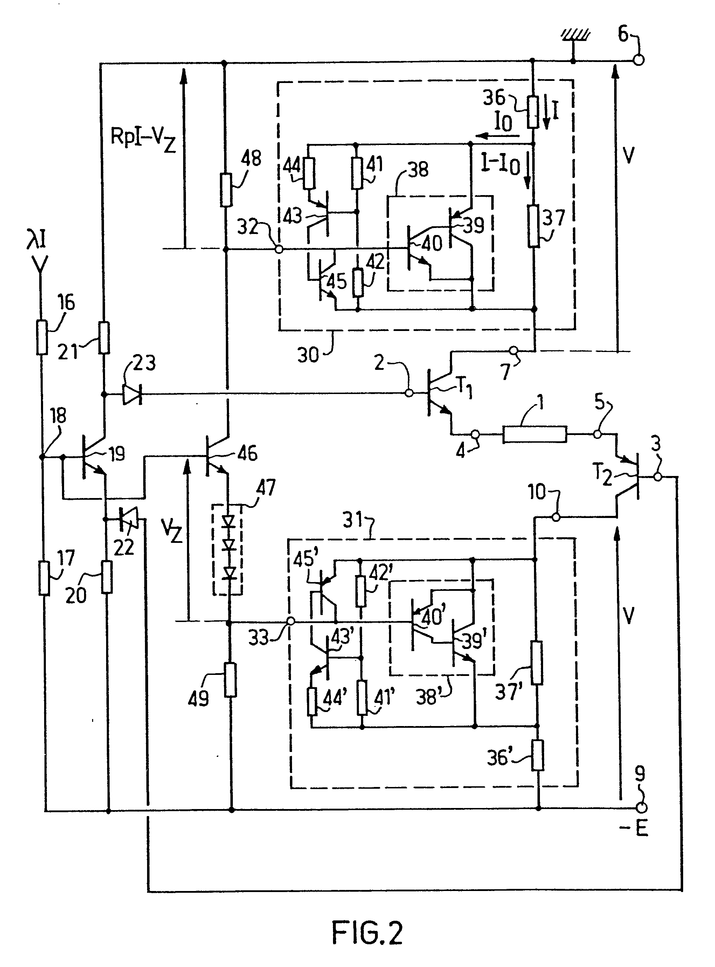

Un joncteur d'abonné muni de telles impédances de charge est représenté sur la figure 2. Sur cette figure 2 on retrouve un certain nombre d'éléments de la figure 1, référencés de la même manière. Pour simplifier la figure on n'a pas représenté les circuits permettant de former le courant de somme $i_1 + i_2 = \lambda I$, qui traverse la résistance 17 pour y déterminer la chute de tension $u = R_p I$. Entre les bornes d'alimentation 7 et 10 des transistors $T_1$ et $T_2$ et les bornes 6 et 9 de la source d'alimentation, sont disposées les impédances de charge 30 et 31 munies respectivement des bornes de commande 32 et 33 pour commander la valeur de ces impédances de charge par des tensions déduites de la tension u.

L'impédance de charge 30 comporte les deux résistances en série 36 et 37 connectées entre la borne positive 6 de la source d'alimentation et la borne d'alimentation 7 du transistor $T_1$. L'impédance de charge 30 comporte également un transistor composite 38 qui est formé du transistor npn 40 et du transistor pnp 39 montés comme l'indique la figure. Ce transistor composite 38 est du même type que le transistor d'entrée 40. La base du transistor composite 38 est constituée par la base du transistor 40, qui est reliée à la borne de commande 32. L'émetteur du transistor composite 38 est constitué par l'émetteur du transistor 40, qui est relié à la borne 7. Le trajet de courant principal du transistor composite 38 est constitué par l'espace émetteur-collecteur du transistor 39, qui est connecté aux bornes de la résistance 37. Enfin l'impédance de charge 30 comporte un diviseur de tension branché aux bornes de la résistance 37 et formé par les deux résistances en série 41 et 42. Le transistor pnp 43 a sa base connectée entre les résistances 41 et 42, son émetteur connecté à l'autre borne de la résistance 41 à travers la résistance 44 et enfin son collecteur relié à la base du transistor npn 45. Ce transistor 45 a son collecteur et son émetteur reliés respectivement à la base et à l'émetteur du transistor 40.

L'impédance de charge 31 connectée entre la borne négative 9 de la source d'alimentation et la borne d'alimentation 10 du transistor $T_2$ est formée de façon semblable à l'aide de composants qui ont les mêmes références, munies toutefois d'un accent, que les composants correspondants de l'impédance de charge 30. Comme le spécialiste le comprendra aisément, les transistors des impédances de charge 30 et 31 sont de types complémentaires.

Pour former les deux tensions appliquées aux bornes de commande 32 et 33 des impédances de charge 30 et 31 on utilise un transistor npn 46 dont la base est connectée à la borne 18 entre les résistances 16 et 17, dont l'émetteur est connecté à la borne négative 9 de la source d'alimentation à travers un circuit 47 formé d'un certain nombre de diodes en série et une résistance 49 et dont enfin le collecteur est relié à la borne d'alimentation positive 6 à travers la résistance 48 ayant la même valeur que la résistance 49. Les bornes des résistances 48 et 49 non reliées aux bornes d'alimentation, sont connectées aux bornes de commande 32 et 33 des impédances de charge 30 et 31. Le transistor 46 monté de cette manière permet de créer aux bornes des résistances 48 et 49 deux tensions d'égale amplitude et en opposition de phase lorsqu'il est commandé sur sa base par une tension suffisante pour faire circuler un courant dans son trajet émetteur-collecteur. La tension appliquée entre la base du transistor 46 et la borne négative d'alimentation 9 est la tension $u = R_p I$ qui existe aux bornes de la résistance 17. Si on appelle $V_z$ la tension de seuil pratiquement constante produite par le passage d'un courant dans le circuit de diodes en série 47 et dans la diode base-émetteur du transistor 46, le courant ne circulera dans le trajet émetteur-collecteur du transistor 46 que si l'on a : $R_p I > V_z$. Dans le cas où $R_p I \leqslant V_z$, les tensions aux bornes des résistances 48 et 49 sont nulles. Dans le cas où $R_p I > V_z$, les tensions aux bornes des résistances 48 et 49 ont les mêmes valeurs absolues $R_p I - V_z$ et sont en opposition de phase.

On va maintenant examiner en détail le comportement de l'impédance de charge 30 sous l'effet de la tension aux bornes de la résistance 48 qui est appliquée entre sa borne de commande 32 et la borne positive d'alimentation 6. On suppose d'abord que la ligne d'abonné n'est parcourue que par le courant transversal I.

Dans le cas où le courant I dans la ligne d'abonné est tel que $R_p I \leqslant V_z$, soit $I \leqslant I_0$ en posant $I_0 = V_z/R_p$, aucune tension n'est créée sur la borne de commande 32 par le transistor 46 qui est bloqué ; le transistor composite 38 est alors saturé par le courant produit dans la base du transistor 40 à travers la résistance 48. La chute de tension dans le trajet de courant principal du transistor composite 38, c'est-à-dire entre l'émetteur et le collecteur du transistor 39 est pratiquement égale à la chute de tension dans la diode base-émetteur du transistor 40. D'une manière générale, on appelle par la suite $V_d$ la chute de tension pratiquement constante dans une diode. Si la résistance 36 parcourue par le courant de ligne I a la valeur r, on voit que, pour les faibles courants de ligne tels que $I \leqslant I_0$, la chute de

tension V créée par l'impédance de charge 30 peut s'écrire :

$$V = rI + Vd \quad (2)$$

Etant donné que la chute de tension totale entre la borne d'alimentation 6 et la borne 4 du joncteur reliée à la ligne d'abonné vaut $R_pI$, la tension $V_{CE}$ entre le collecteur et l'émetteur du transistor $T_1$ vaut dans le cas où $I \leqslant I_0$ :

$$V_{CE} = R_pI - (V_d + rI) \quad (3)$$

La caractéristique de la chute de tension V dans l'impédance de charge 30 en fonction du courant I de ligne, pour $I \leqslant I_0$, est représentée sur la figure 3, par la portion de courbe AB conformément à la formule (2). De plus, sur cette figure la demi-droite en pointillé OE représente la chute de tension totale $R_pI$ entre les bornes 4 et 6. La différence entre les ordonnées des courbes OE et AB représente ainsi la tension $V_{CE}$ entre le collecteur et l'émetteur du transistor $T_1$ conformément à la formule (3). Pour le point B qui correspond au courant $I_0$, on peut vérifier aisément que cette tension $V_{CE}$ peut s'écrire $(V_{CE})B = V_z - V_d - rI_0$.

Pour les courants I dans la ligne d'abonné tels que $I > I_0$, la tension sur la borne de commande 32 est $- (R_pI - V_z)$. Le transistor composite 38 n'est plus saturé et fonctionne en amplificateur suiveur de tension de sorte que sur l'émetteur du transistor 40 (c'est-à-dire du transistor composite 38), on trouve la tension $- (R_pI - V_z) - V_d$, le terme $- V_d$ étant dû à la chute de tension dans la diode base-émetteur du transistor 40. La chute de tension V aux bornes de l'impédance de charge vaut donc :

$$V = R_pI - V_z + V_d \quad (4)$$

On en déduit que la tension $V_{CE}$ entre le collecteur et l'émetteur du transistor $T_1$ a pour valeur :

$$V_{CE} = R_pI - V = V_z - V_d \quad (5)$$

La caractéristique de la chute de tension V pour $I > I_0$ est représentée sur la figure 3 par la portion de droite CD, conformément à la formule (4). On peut noter que les deux courbes AB et CD ne se raccordent pas exactement pour le courant $I_0$, la différence d'ordonnées entre les points B et C étant la faible valeur $rI_0$. La différence d'ordonnées constante entre les courbes OE et CD traduit le fait que la tension $V_{CE}$ entre le collecteur et l'émetteur du transistor $T_1$ est constante et indépendante du courant de ligne I comme le montre la formule (5). Par conséquent, sans risque de saturation du transistor $T_1$, par les courants variables de conversation, la tension $V_{CE}$ peut être fixée à une faible valeur, de l'ordre par exemple de 2 Volts, en réglant la tension $V_z$ déterminée par le circuit à diodes en série 47. Une faible puissance est alors dissipée dans le transistor $T_1$.

La plus grande partie de la puissance à dissiper dans le joncteur doit donc être dissipée dans l'impédance de charge 30 et il est bien entendu avantageux que cette puissance soit dissipée en majeure partie dans une résistance. Il est intéressant pour cela que la résistance 37 ait la valeur $R_p - r$, r étant la valeur de la résistance 36, faible vis-à-vis de $R_p$. En effet d'une manière générale, la tension v aux bornes de la résistance 37 peut s'écrire :

$$v = R_p(I - I_o) + V_d - rI$$

$$= I(R_p - r) + V_d - R_pI_o$$

Si la résistance 37 a la valeur $R_p - r$, le courant i qui la traverse vaut :

$$i = I - I_o \frac{R_p}{R_p - r} + \frac{V_d}{R_p - r}$$

En négligeant le terme $V_d/(R_p - r)$ et en négligeant r devant $R_p$, on voit que le courant i dans la résistance 37 vaut sensiblement $I - I_o$ et que le courant traversant le transistor composite 38 est sensiblement égal à la valeur constante $I_o$. Ainsi, pour les courants dans la ligne d'abonné notablement plus élevés que le courant $I_o$, la majeure partie de la puissance à dissiper dans le joncteur est dissipée dans la résistance 37.

On examine maintenant le comportement de l'impédance de charge 30 et du joncteur, en présence d'un courant longitudinal $I_l$ créé intempestivement dans la ligne d'abonné en même temps que le courant transversal I fourni par le joncteur. Comme on l'a expliqué à propos de la figure 1, il circule alors par exemple un courant $I + I_l$ entre la borne d'alimentation 6 et la borne 4 du joncteur, via l'impédance de charge 30 et l'espace émetteur-collecteur du transistor $T_1$. Mais le courant longitudinal $I_l$ est sans influence sur les tensions relatives entre les électrodes du transistor $T_1$. En effet, comme on l'a vu, la chute de tension $u = R_pI$ aux bornes de la résistance 17 est indépendante du courant longitudinal $I_l$ et il en résulte que la tension $- u = - R_pI$ sur la base du transistor $T_1$ est indépendante du courant longitudinal $I_l$. La tension sur le collecteur du transistor $T_1$ résulte de la chute de tension V dans l'impédance de charge 30 et d'après la formule (4), cette tension de collecteur de $T_1$ vaut $- V = - u + V_z - V_d$. Il est donc clair que la tension sur le collecteur du transistor $T_1$ est indépendante du courant longitudinal $I_l$. Enfin la formule (5) montre que la tension entre collecteur et émetteur du transistor $T_1$ est constante. Ainsi, avec une impédance de charge 30 commandée de la façon décrite plus haut, le fonctionnement du transistor $T_1$ n'est pratiquement pas affecté par le courant longitudinal $I_l$, jusqu'à environ la valeur du courant I créé par le joncteur dans la ligne d'abonné. On peut remarquer que dans l'impédance de charge 30, le courant longitudinal $I_l$ est nécessairement absorbé par le transistor composite 38, pour maintenir pratiquement constante la tension sur le collecteur du transistor $T_1$.

L'impédance de charge 31 connectée entre le collecteur et la borne négative 9 de la source d'alimentation et commandée par la tension sur sa borne de commande 33 a un fonctionnement identique à celui de l'impédance de charge 30, et présente les mêmes propriétés. Entre ses bornes se produit une chute de tension V, telle qu'on l'a représentée sur la figure 3 ; elle procure une tension constante $V_z - V_d$ entre l'émetteur et le collecteur du transistor $T_2$ ; enfin le fonctionnement de ce dernier n'est pas affecté par un courant longitudinal $I_l$.

On n'a jusqu'à présent pas tenu compte dans la description du fonctionnement des impédances de charge 30 et 31 des éléments 41 à 45 et 41' à 45'. Ces éléments n'interviennent en effet que dans des cas accidentels, par exemple lors d'un court-circuit en ligne, où le courant I dans la ligne d'abonné dépasse une certaine intensité maximale admise. Il est alors nécessaire de protéger les transistors $T_1$ et $T_2$ parcourus par ce courant, contre une dissipation de puissance trop élevée. La chute de tension V aux bornes de l'impédance de charge 30 par exemple, croît avec le courant I dans la ligne d'abonné et pour l'intensité maximale admise de ce courant, la tension aux bornes de la résistance 41 est suffisante pour débloquer le transistor 43, ce qui entraîne la saturation du transistor 45. Le transistor 40 a alors entre sa base et son émetteur une tension insuffisante pour y produire un courant de base et il en résulte que le transistor composite 38 se bloque et n'impose plus une tension déterminée sur le collecteur du transistor $T_1$. L'impédance connectée sur le collecteur du transistor $T_1$ est alors pratiquement la résistance 37 en série avec la résistance 36 et ce transistor $T_1$ devient saturé de sorte que le courant élevé qui le traverse n'y produit qu'une dissipation de puissance relativement faible.

De plus, on peut utiliser comme résistance 37 une thermistance ayant pour but de limiter le courant traversant le joncteur et notamment le transistor $T_1$, en cas de surintensité de courant dans la ligne d'abonné. Cette thermistance a le comportement d'une résistance ayant les valeurs précisées ci-dessus dans la gamme des courants normaux dans la ligne d'abonné. Au-delà d'une certaine valeur du courant dans la ligne d'abonné, qui est supérieure à celle qui produit le blocage du transistor composite 38 et la saturation du transistor $T_1$, la puissance dissipée dans la thermistance 37 devient suffisamment grande pour qu'elle acquiert brusquement une résistance de valeur élevée qui fait diminuer de façon importante le courant traversant le joncteur.

Le fonctionnement de l'impédance de charge 31 lors de surintensité accidentelle dans la ligne d'abonné est identique à celui de l'impédance de charge 30 et produit les mêmes effets sur la puissance dissipée dans le transistor $T_2$ et le courant traversant le joncteur.

**Revendications**

1. Joncteur d'abonné alimenté par une source d'alimentation continue dont les deux bornes (6, 9) sont connectées à deux bornes d'alimentation (7, 10) de deux amplificateurs ($T_1$, $T_2$) à travers deux impédances de charge (30, 31), les deux autres bornes d'alimentation (4, 5) desdits amplificateurs ($T_1$, $T_2$) étant connectées aux deux extrémités de la ligne d'abonné (1) et constituant leurs bornes de sortie à travers lesquelles circule le courant dans la ligne d'abonné (1), les bornes d'entrée (2, 3) de ces amplificateurs ($T_1$, $T_2$) recevant, de façon contreréactive, deux tensions en phase et en opposition de phase avec la tension (u) aux bornes d'une impédance (17) parcourue par un courant de somme ($i_1 + i_2$) égal à la somme pondérée des courants entrant et sortant de la ligne d'abonné (1) avec des coefficients de pondération substantiellement égaux, caractérisé en ce qu'il comporte des moyens (46-49) pour former deux tensions de commande desdites impédances de charge (30, 31), dont l'une est formée en décalant avec une certaine tension de décalage ($V_Z$) la tension (u) aux bornes de ladite impédance (17) parcourue par le courant de somme ($i_1 + i_2$) et dont l'autre est en opposition de phase avec la première tension de commande, ces tensions de commande étant appliquées aux deux impédances de charge (30, 31) avec la même phase que les tensions appliquées aux bornes d'entrée (2, 3) des deux amplificateurs ($T_1$, $T_2$) correspondants, ces impédances de charge (30, 31) comportant un circuit suiveur de tension (38, 38') pour former sur les deux bornes d'alimentation (7, 10) des amplificateurs auxquelles elles sont connectées des tensions substantiellement égales auxdites tensions de commande.

2. Joncteur d'abonné selon la revendication 1, caractérisé en ce que ladite tension de décalage ($V_Z$) est choisie pour établir, dans la gamme des courants normaux dans la ligne d'abonné, une différence de tension prédéterminée entre la borne d'alimentation (7 ou 10) connectée à l'impédance de charge (30 ou 31) et la borne d'entrée (2 ou 3) de chaque amplificateur ($T_1$ ou $T_2$) du joncteur.

3. Joncteur d'abonné selon l'une des revendications 1 ou 2, caractérisé en ce que dans chaque impédance de charge (38 ou 31) le circuit suiveur de tension (30 ou 38') est constitué par un transistor simple ou composite (39, 40 ou 39', 40') dont la base (32, 33) reçoit l'une desdites tensions de commande, dont l'émetteur est connecté à la borne d'alimentation (7 ou 10) connectée à l'impédance de charge (30 ou 31) de l'un desdits amplificateurs, dont le collecteur est connecté à une borne (6 ou 9) de la source de courant continu à travers une résistance (36 ou 36') de valeur ohmique faible vis-à-vis de celle de la résistance de pont d'alimentation du joncteur et dont enfin l'émetteur et le collecteur sont reliés à travers une résistance (37 ou 37') ayant une valeur ohmique voisine de celle de la résistance de pont d'alimentation du joncteur.

4. Joncteur d'abonné selon la revendication 3, caractérisé en ce que la résistance (37 ou 37') connectée entre l'émetteur et le collecteur du transistor formant le circuit suiveur de tension (38 ou 38') a une valeur ohmique égale à la différence entre celle de la résistance de pont d'alimentation du joncteur et celle de la résistance (36 ou 36') connectée sur l'émetteur dudit transistor.

5. Joncteur d'abonné selon l'une des revendications 1 à 4, caractérisé en ce que chaque impédance de charge (30 ou 31) comporte des moyens (41-45 ou 41'-45') pour détecter un dépassement du courant maximal admissible fourni par le joncteur et pour bloquer le circuit suiveur de tension (38 ou 38') lorsque ce dépassement est détecté.

6. Joncteur d'abonné selon la revendication 4, caractérisé en ce que la résistance (37 ou 37') connectée entre l'émetteur et le collecteur dudit circuit suiveur de tension (38 ou 38') est une thermistance dont la valeur ohmique augmente brusquement au-delà du courant maximum admissible fourni par le joncteur.

## Claims

1. A subscriber line interface circuit fed by a d.c. voltage source whose two terminals (6, 9) are connected to two supply terminals (7, 10) of two amplifiers ($T_1$, $T_2$) via two load impedance (30, 31), the other two supply terminals (4, 5) of the said amplifiers ($T_1$, $T_2$) being connected to two ends of the subscriber line (1) and forming their output terminals through which the current circulates in the subscriber line (1), the input terminals (2, 3) of these amplifiers ($T_1$, $T_2$) receiving by means of negative feedback two voltages which are in phase and in anti-phase with the voltage (U) at the terminals of an impedance (17) through which a sum current ($i_1 + i_2$) flows which is equal to the weighted sum of the currents which enter and leave the subscriber line (1) with substantially equal weighting coefficients characterized in that it comprises means (46-49) for forming two control voltages for the said load impedances (30, 31), one of which is formed by shifting with a predetermined shift voltage ($V_2$) the voltage (U) at the terminals of the said impedance (17) through which the sum current ($i_1 + i_2$) flows and the other voltage is in anti-phase with the first control voltage, these control voltages being applied to two load impedances (30, 31) with the same phase as the voltages applied to the input terminals (2, 3) of the two corresponding amplifiers ($T_1$, $T_2$), these load impedances (30, 31) comprising a voltage follower circuit (38, 38') for producing at the two supply terminals (7, 10) of the amplifiers to which they are connected voltages which are substantially equal to the said control voltages.

2. A subscriber line interface circuit as claimed in Claim 1, characterized in that the said shift voltage ($V_2$) is selected for producing, in the range of the normal currents in the subscriber line, a predetermined voltage difference between the supply terminal (7 or 10) connected to the load impedance (30 or 31) and the input terminal (2 or 3) of each amplifier ($T_1$ or $T_2$) of the interface circuit.

3. A subscriber interface circuit as claimed in Claim 1 or 2, characterized in that in each load impedance (30 or 31) the voltage follower circuit (38 or 38') is formed by a single or a composite transistor (39, 40 or 39', 40') whose base (32, 33) receives one of the said control voltages and whose emitter is connected to the supply terminal (7 or 10) which is connected to the load impedance (30 or 31) of one of the said amplifiers, and whose collector is connected to a terminal (6 or 9) of the direct current source via a resistor (36 or 36') which has a resistance value which is low relative to that of the resistor of the resistance bridge of the line interface circuit, and, whose emitter and collector are interconnected via a resistor (37 or 37') which has a resistance value which is near the value of the resistor of the resistance bridge of the line interface circuit.

4. A subscriber line interface circuit as claimed in Claim 3, characterized in that the resistor (37 or 37') connected between the emitter and the collector of the transistor forming the voltage follower circuit (38 or 38') has a resistance value which is equal to the difference between the value of the resistor of the feed bridge of the line interface circuit and the value of the resistor (36 or 36') connected to the emitter of the said transistor.

5. A subscriber line interface circuit as claimed in any of the Claims 1 to 4, characterized in that each load impedance (30 or 31) comprises means (41-45 or 41'-45') to detect when the maximum permissible current supplied by the line interface circuit is exceeded and to block the voltage follower circuit (38 or 38') when it is detected that this current is exceeded.

6. A subscriber line interface circuit as claimed in Claim 4, characterized in that the resistor (37 or 37') connected between the emitter and the collector of the said voltage follower circuit (38 or 38') is a thermistor whose resistance value increases suddenly above the maximum permissible current supplied by the line interface circuit.

## Ansprüche

1. Teilnehmerverbindungssatz, der durch eine Gleichspannungsquelle gespeist wird, deren zwei Klemmen (6, 9) über zwei Belastungswiderstände (30, 31) mit zwei Speiseklemmen (7, 10) von zwei Verstärkern ($T_1$, $T_2$) verbunden sind, wobei die zwei anderen Speiseklemmen (4, 5) der genannten Verstärker ($T_1$, $T_2$) mit zwei Enden des Teilnehmerverbindungssatzes (1) verbunden sind, und die Ausgangsklemmen bilden, über die der Strom in dem Teilnehmerverbindungssatz (1) umläuft, wobei die Eingangsklemmen (2, 3) dieser

Verstärker ($T_1$, $T_2$) durch Rückkopplung zwei Spannungen erhalten, die zu der Spannung (U) an den Klemmen einer Impedanz (17) gleichphasig und in Gegenphase sind, über welche Impedanz ein Summenstrom ($i_1 + i_2$) fliesst, der der gewichteten Summe der Ströme entspricht, die in den Teilnehmerverbindungssatz (1) hineingehen und diesen verlassen, mit nahezu gleichen Gewichtungskoeffizienten, dadurch gekennzeichnet, dass der Satz Mittel (46-49) enthält zum Bilden zweier Regelspannungen für die genannten Belastungswiderstände (30, 31), von denen eine dadurch gebildet wird, dass die Spannung (U) an den Klemmen der genannten Impedanz (17) über die der Summestrom ($i_1 + i_2$) fliesst, mit einer vorbestimmten Schiebespannung ($V_z$) verschoben wird und die andere Spannung zu der ersten Regelspannung in Gegenphase ist, wobei diese Regelspannungen mit derselben Phase wie die der den Eingangsklemmen (2, 3) der zwei bereffenden Verstärker ($T_1$, $T_2$) zugeführten Spannungen zwei Belastungswiderständen (30, 31) zugeführt werden, wobei diese Belastungswiderstände (30, 31) zum an den zwei Speiseklemmen (7, 10) der Verstärker, mit denen sie verbunden sind, eine Spannungsfolgeschaltung (38, 38') enthält, welche Spannungen den genannten Regelspannungen nahezu entsprechen.

2. Teilnehmerverbindungssatz nach Anspruch 1, dadurch gekennzeichnet, dass die genannte Schiebespannung ($V_z$) gewählt wird zum im Bereich der normalen Ströme in der Teilnehmerleitung Erzeugen eines vorbestimmten Spannungsunterschiedes zwischen der Speiseklemme (7 oder 10), die mit dem Belastungswiderstand (30 oder 31) verbunden ist, und der Eingangsklemme (2 oder 3) jedes Verstärkers ($T_1$ oder $T_2$) des Verbindungssatzes.

3. Teilnehmerverbindungssatz nach Anspruch 1 oder 2, dadurch gekennzeichnet, dass in jedem Belastungswiderstand (30 oder 31) die Spannungsfolgeschaltung (38 oder 38') durch einen einfachen oder einen zusammengesetzten Transistor (39, 40 oder 39', 40') gebildet wird, dessen Basis (32, 33) eine der genannten Regelspannungen erhält und dessen Emitter mit der Speiseklemme (7 oder 10), die mit dem Belastungswiderstand (30 oder 31) eines der genannten Verstärker verbunden ist, verbunden ist, und dessen Kollektor über einen Widerstand (36 oder 36'), der einen Widerstandswert hat, der gegenüber dem des Widerstandes der Widerstandsbrücke des Teilnehmerverbindungssatzes niedrig ist, mit einer Klemme (6 oder 9) der Gleichstromquelle verbunden ist, dessen Emitter und Kollektor über einen Widerstand (37 oder 37'), der einen Widerstandswert hat, der dem Wert des Widerstandes der Widerstandsbrücke des Teilnehmerverbindungssatzes nahezu entspricht, miteinander verbunden sind.

4. Teilnehmerverbindungssatz nach Anspruch 3, dadurch gekennzeichnet, dass der Widerstand (37 oder 37') zwischen dem Emitter und dem Kollektor des Transistors die Spannungsfolgeschaltung (38 oder 38') bildet, einen Widerstandswert hat, der der Differenz zwischen dem Wert des Widerstandes der Speisebrücke des Teilnehmerverbindungssatzes und dem Wert des Widerstandes (36 oder 36') der mit dem Emitter des genannten Transistors verbunden ist, entspricht.

5. Teilnehmerverbindungssatz nach einem der Ansprüche 1 bis 4, dadurch gekennzeichnet, dass jeder Belastungswiderstand (30 oder 31) Mittel (41-45 oder 41'-45') enthält, um zu detektieren, wann der maximal erlaubte Strom, der von dem Teilnehmerverbindungssatz geliefert wird, überschritten wird und um die Spannungsfolgeschaltung (38 oder 38') zu sperren, wenn detektiert wird, dass dieser Strom überschritten wird.

6. Teilnehmerverbindungssatz nach Anspruch 4, dadurch gekennzeichnet, dass der Widerstand (37 oder 37') zwischen dem Emitter und dem Kollektor der genannten Spannungsfolgeschaltung (38 oder 38') ein Thermistor ist, dessen Widerstandswert über dem maximal erlaubten Strom, der von dem Teilnehmerverbindungssatz geliefert wird, plötzlich ansteigt.

FIG.1

FIG.3

FIG.2